# EUROPÄISCHE PATENTANMELDUNG

(11) **EP 4 666 857 A1**
(43) Veröffentlichungstag der Anmeldung: **24.12.2025**
(21) Anmeldenummer: 25181518.9
(22) Anmeldetag: 06.06.2025
(51) Int. Cl.: A21B 3/04, F24C 15/00, F24C 15/32, F24C 15/34

(54) **GARGERÄT MIT THERMOCHEMISCHER WÄRMESPEICHEREINRICHTUNG UND MIT STELLGLIED ZUM VERÄNDERN DER FEUCHTE IM GARRAUM UND VERFAHREN ZUM BETREIBEN EINES GARGERÄTS**

(30) Priorität: 20.06.2024 DE 102024205750
(71) Anmelder: BSH Hausgeräte GmbH, 81739 München (DE)
(72) Erfinder: Sauerbier, Rolf, 76275 Ettlingen (DE); Jenz, Alexandra, 72644 Oberboihingen (DE); Ball, Ludovic, 67770 Sessenheim (FR); Somdalen, Ragnar, 81539 München (DE)

(57) **Zusammenfassung**

Die Erfindung betrifft ein Gargerät (1) mit einem Garraum (3), welcher in einer Muffel (4) des Gargeräts (1) ausgebildet ist, wobei an wenigstens einer Wandung der Muffel (4) zumindest eine thermochemische Wärmespeichereinrichtung (10) angeordnet ist. Eine Steuerungseinrichtung (8) des Gargeräts (1) ist zum Ansteuern der zumindest einen thermochemischen Wärmespeichereinrichtung (10) und zum Ansteuern wenigstens eines Heizelements (9) des Gargeräts (1) ausgebildet. Durch das Ansteuern der zumindest einen thermochemischen Wärmespeichereinrichtung (10) ist ein Verändern einer in dem Garraum (3) herrschenden Temperatur zumindest unterstützbar. Das Gargerät (1) weist zumindest ein von der Steuerungseinrichtung (8) ansteuerbares Stellglied (18, 22, 23, 26, 28, 30, 32) auf, welches zum Verändern einer in dem Garraum (3) herrschenden Feuchte ausgebildet ist. Des Weiteren betrifft die Erfindung ein Verfahren zum Betreiben des Gargeräts (1).

## Beschreibung

Die Erfindung betrifft ein Gargerät mit einem Garraum, welcher in einer Muffel des Gargeräts ausgebildet ist. An wenigstens einer Wandung der Muffel ist zumindest eine thermochemische Wärmespeichereinrichtung angeordnet. Eine Steuerungseinrichtung des Gargeräts ist zum Ansteuern der zumindest einen thermochemischen Wärmespeichereinrichtung und zum Ansteuern wenigstens eines Heizelements des Gargeräts ausgebildet. Durch das Ansteuern der zumindest einen thermochemischen Wärmespeichereinrichtung ist ein Verändern einer in dem Garraum herrschenden Temperatur zumindest unterstützbar. Des Weiteren betrifft die Erfindung ein Verfahren zum Betreiben eines solchen Gargeräts.

Die DE 10 2020 200 842 A1 beschreibt einen Backofen, bei welchem an einer Seitenwandung einer Muffel eine thermochemische Wärmespeichereinheit angeordnet ist. In einem Abgabebetriebszustand führt die Wärmespeichereinheit der Seitenwandung thermische Energie zu. Und in einem Aufnahmebetriebszustand entzieht die Wärmespeichereinheit der Seitenwandung thermische Energie.

Aufgabe der vorliegenden Erfindung ist es, ein Gargerät der eingangs genannten Art zu schaffen, welches eine verbesserte Veränderung des Garraumklimas ermöglicht, und ein entsprechendes Verfahren zum Betreiben eines Gargeräts anzugeben.

Diese Aufgabe wird durch ein Gargerät mit den Merkmalen des Patentanspruchs 1 und durch ein Verfahren mit den Merkmalen des Patentanspruchs 14 gelöst. Vorteilhafte Ausgestaltungen mit zweckmäßigen Weiterbildungen der Erfindung sind in den abhängigen Patentansprüchen und in der nachfolgenden Beschreibung angegeben.

Das erfindungsgemäße Gargerät umfasst einen Garraum, welcher in einer Muffel des Gargeräts ausgebildet ist. An wenigstens einer Wandung der Muffel ist zumindest eine thermochemische Wärmespeichereinrichtung angeordnet. Eine Steuerungseinrichtung des Gargeräts ist zum Ansteuern der zumindest einen thermochemischen Wärmespeichereinrichtung und zum Ansteuern wenigstens eines Heizelements des Gargeräts ausgebildet. Durch das Ansteuern der zumindest einen thermochemischen Wärmespeichereinrichtung ist ein Verändern einer in dem Garraum herrschenden Temperatur zumindest unterstützbar. Das Gargerät weist zumindest ein von der Steuerungseinrichtung ansteuerbares Stellglied auf, welches zum Verändern einer in dem Garraum herrschenden Feuchte ausgebildet ist.

Dem liegt die Erkenntnis zugrunde, dass ein Verändern der in dem Garraum herrschenden Temperatur mit einer Veränderung der in dem Garraum herrschenden relativen Feuchte einhergeht. Beispielsweise kann die relative Feuchte in dem Garraum ansteigen, wenn aufgrund eines Abschaltens des wenigstens einen Heizelements die Temperatur im Garraum absinkt. Ein solches Absinken der Temperatur kann durch Ansteuern der thermochemischen Wärmespeichereinrichtung unterstützt und somit beschleunigt werden. Dementsprechend kann aufgrund des Ansteuerns der thermochemischen Wärmespeichereinrichtung eine besonders rasche Verringerung der in dem Garraum herrschenden Temperatur erreicht werden. Wenn hierbei die relative Feuchte beispielsweise konstant gehalten werden oder nicht so stark ansteigen soll, wie dies bei einem solchen raschen Abkühlvorgang ansonsten der Fall wäre, kann vorliegend von der Steuerungseinrichtung das zumindest eine Stellglied angesteuert werden. Durch das Ansteuern des zumindest einen Stellglieds lässt sich nämlich die in dem Garraum herrschende Feuchte aktiv verändern.

Im Falle des beispielhaft geschilderten, raschen Verringerns der in dem Garraum herrschenden Temperatur kann durch das Ansteuern des zumindest einen Stellglieds die absolute Feuchte in dem Garraum verringert und somit ein unerwünscht starkes Ansteigen der relativen Feuchte vermieden werden. Dies ist vorteilhaft.

In analoger Weise geht ein rasches Erhöhen der Temperatur im Garraum mit einer raschen Verringerung der relativen Feuchte im Garraum einher, wenn nicht auf die absolute Feuchte im Garraum Einfluss genommen wird. Auch um eine solche Verringerung der relativen Feuchte zu verhindern oder zumindest ein Absinken der relativen Feuchte zu begrenzen, kann vorliegend von der Steuerungseinrichtung das zumindest eine Stellglied angesteuert werden. Folglich lässt sich durch das Ansteuern des zumindest einen Stellglieds durch die Steuerungseinrichtung des Gargeräts ein aktives Feuchtigkeitsmanagement in dem Garraum realisieren. Das Gargerät ermöglicht demnach eine verbesserte Veränderung des Garraumklimas.

Dem liegt die Erkenntnis zugrunde, dass eine physikalische Kopplung der in dem Garraum vorliegenden relativen Luftfeuchtigkeit an die in dem Garraum vorliegende Lufttemperatur besteht. Und bei dem Ansteuern des zumindest einen Stellglieds des Gargeräts kann diese physikalische Kopplung beachtet werden, insbesondere durch Regeln der in dem Garraum einzustellenden Feuchte.

In vorteilhafter Weise kann eine für das Gargut günstige, insbesondere im Hinblick auf die Feuchte günstige, Garraumatmosphäre beispielsweise während des Abkühlens des Garraums und/oder während eines Warmhaltens des Garguts in dem Garraum erhalten werden, indem die Steuerungseinrichtung das zumindest eine Stellglied ansteuert.

Zudem ist durch die Möglichkeit, durch das Ansteuern des Stellglieds auf die Feuchte Einfluss zu nehmen, eine Wechselwirkung zwischen der Feuchte und der Temperatur in dem Garraum nicht unkontrolliert beziehungsweise Folge einer stets unbeeinflussbar gegebenen Abhängigkeit. Vielmehr können durch das von der Steuerungseinrichtung bewirkte Ansteuern sowohl die Temperatur als auch die Feuchte in dem Garraum gezielt eingestellt werden.

Die thermochemische Wärmespeichereinrichtung ist dazu ausgebildet, das Verändern der in dem Garraum herrschenden Temperatur zumindest zu unterstützen. Es kann demnach das Verändern der Temperatur durch die thermochemische Wärmespeichereinrichtung alleine bewirkt werden, oder die thermochemische Wärmespeichereinrichtung kann das Verändern der Temperatur unterstützen, welches durch das Ansteuern des wenigstens einen Heizelements hervorgerufen wird. Das Ansteuern des Heizelements zum Zwecke eines Betreibens des Heizelements führt zum Erhöhen der Temperatur im Garraum. Und das Ansteuern des Heizelements in Form eines Abschaltens des Heizelements oder zum Zwecke eines Verringerns einer Wärmeabgabe durch das Heizelement führt zu einer Verringerung der Temperatur in dem Garraum. Alle diese Vorgänge können durch das Ansteuern der zumindest einen thermochemischen Wärmespeichereinrichtung unterstützt werden.

Das Vorsehen der zumindest einen thermochemischen Wärmespeichereinrichtung sorgt in vorteilhafter Weise für eine Energieeinsparung bei Temperaturänderungen im Betrieb des Gargeräts und/oder nach Beendigung eines Garprozesses. Denn von der Wärmespeichereinrichtung aufgenommene Wärme kann in einem Folgebetrieb des Gargeräts verwendet werden, etwa um eine zusätzliche Aufheizung oder eine Vorheizung des Garraums zu bewirken. Dies ist vorteilhaft.

Des Weiteren lässt sich durch Nutzung der thermochemischen Wärmespeichereinrichtung ein besonders schnelles, energieeffizientes Abkühlen des Garraums realisieren. Dies kann vorliegend erreicht werden, ohne dass hierbei Probleme mit zu viel beim Abkühlen anfallendem Kondensat auftreten. Denn durch das Ansteuern des zumindest einen Stellglieds kann gezielt auf die in dem Garraum herrschende Feuchte Einfluss genommen werden. Insbesondere kann durch Einbringen von vergleichsweise trockener Luft, etwa aus einer Umgebung des Gargeräts, in den Garraum ein unerwünscht starker Anstieg der relativen Feuchte in dem Garraum während des Abkühlens verhindert werden. Von Vorteil ist weiterhin, dass durch die Einbindung der zumindest einen thermochemischen Wärmespeichereinrichtung in das Gargerät eine beschleunigte Veränderung der Garraumatmosphäre bewirkt werden kann.

Vorzugsweise umfasst das zumindest eine Stellglied eine Zuführeinrichtung, mittels welcher aus einer Umgebung des Gargeräts stammende Zuluft über zumindest eine Mündungsöffnung in den Garraum einbringbar ist. Hierbei ist die zumindest eine Mündungsöffnung in der Muffel ausgebildet. Dem liegt die Erkenntnis zugrunde, dass aus der Umgebung des Gargeräts stammende Zuluft üblicherweise trockener ist als die sich während eines Garprozesses in dem Garraum befindende Luft. Entsprechend kann durch das Ansteuern der Zuführeinrichtung gezielt die in dem Garraum herrschende Feuchte abgesenkt werden. Derartiges ist beispielsweise vorteilhaft, um während eines Abkühlprozesses eine Kondensation, also eine Bildung von flüssigem Wasser, in dem Garraum möglichst weitgehend zu unterbinden.

Vorzugsweise umfasst die Zuführeinrichtung wenigstens ein Dosierelement, welches dazu ausgebildet ist, Wasser in die Zuluft einzubringen. So kann bei Bedarf die Zuführeinrichtung genutzt werden, um Wasser enthaltende Zuluft in den Garraum einzubringen. Derartiges kann insbesondere genutzt werden, um bei einem Erhöhen der Temperatur in dem Garraum ein unerwünscht starkes Absinken der relativen Feuchte zu verringern.

Das Dosierelement kann insbesondere dazu ausgebildet sein, Wassertröpfchen in die Zuluft einzubringen. Dadurch lässt sich eine besonders feine Verteilung des Wassers in dem Garraum realisieren. Dies ist einer raschen Anhebung der in dem Garraum herrschenden Feuchte zuträglich.

Zusätzlich oder alternativ kann das zumindest eine Stellglied eine Einspritzvorrichtung umfassen, welche dazu ausgebildet ist, Wassertröpfchen und/oder Wasser in den Garraum einzuspritzen. So kann sehr direkt und aufwandswarm die in dem Garraum herrschende Feuchte erhöht werden. Dies ist beispielsweise vorteilhaft, wenn im Rahmen eines Warmhaltens von Gargut in dem Gargerät verhindert werden soll, dass es zu einem Austrocknen des Garguts aufgrund der beim Warmhalten erhöhten Temperatur in dem Garraum kommt.

Zusätzlich oder alternativ kann das zumindest eine Stellglied einen in dem Garraum angeordneten Verdampfer umfassen, welcher zum Verdampfen von Wasser ausgebildet ist. Dadurch lässt sich in dem Garraum Wasserdampf bereitstellen und so die Feuchte in dem Garraum erhöhen. Dies ist einem bedarfsgerechten Einstellen der in dem Garraum herrschenden Feuchte zuträglich.

Vorzugsweise umfasst das Gargerät eine Zuleitung, mittels welcher der Verdampfer mit dem zu verdampfenden Wasser beaufschlagbar ist. Dadurch kann der in dem Garraum angeordnete Verdampfer je nach einzustellender Feuchte mit der entsprechenden Menge an Wasser beaufschlagt werden, dessen Verdampfen zu der Ausbildung von Dampf in dem Garraum führt. Dies ist vorteilhaft.

Zusätzlich oder alternativ kann das zumindest eine Stellglied einen außerhalb des Garraums angeordneten Verdampfer umfassen, welcher zum Verdampfen von Wasser ausgebildet ist. Hierbei weist der Verdampfer eine Dampfleitung auf, über welche Wasserdampf in den Garraum einbringbar ist. Durch die Nutzung des außerhalb des Garraums angeordneten oder externen Verdampfers kann besonders heißer Dampf in den Garraum eingebracht werden. Dies ist insbesondere dann vorteilhaft, wenn möglichst weitgehend verhindert werden soll, dass es bei einem Erhöhen der Feuchte in dem Garraum zu einem Absinken der Temperatur in dem Garraum kommt.

Insbesondere kann der außerhalb des Garraums angeordnete Verdampfer dazu ausgebildet sein, über die Dampfleitung Nassdampf in den Garraum einzubringen, also Wasserdampf, welcher übersättigt ist und somit zusätzlich Wassertröpfchen enthält. Dies ist einer sehr raschen Anhebung der Feuchte in dem Garraum bei zugleich möglichst weitgehender Aufrechterhaltung der Temperatur in dem Garraum zuträglich.

Zusätzlich oder alternativ kann das zumindest eine Stellglied eine Kühleinrichtung zum Abkühlen von aus dem Garraum stammendem Wrasen und eine Auffangeinrichtung umfassen. Hierbei ist die Auffangeinrichtung zum Auffangen von Kondensat ausgebildet, welches durch das Abkühlen des Wrasens erzeugbar ist. Durch eine derartige Kondensatfalle kann gezielt die in dem Garraum herrschende Feuchte abgesenkt werden, ohne dass es in dem Garraum zu einer Ausbildung von Kondensat kommt. Durch das Vorsehen der dem Sammeln oder Auffangen von Kondensat dienenden Auffangeinrichtung kann erreicht werden, dass beim Abkühlen des Wrasens erzeugtes Kondensat nicht in dem Garraum verbleibt, sondern gezielt außerhalb des Garraums aufgefangen wird. Dementsprechend ist die Auffangeinrichtung vorzugsweise außerhalb des Garraums angeordnet. In der Kühleinrichtung kann das Abkühlen des Wrasens insbesondere mittels eines im Vergleich zu dem Wrasen kühleren Luftstroms erreicht werden, insbesondere in Form von aus einer Umgebung des Gargeräts stammender Frischluft.

Zusätzlich oder alternativ kann das zumindest eine Stellglied einen Aktuator umfassen, welcher dazu ausgebildet ist, eine Tür des Gargeräts zumindest bereichsweise zu öffnen. Hierbei ist der Garraum mittels der Tür verschließbar. Dem liegt die Erkenntnis zugrunde, dass durch ein Öffnen des Garraums, also durch Bewegen der Tür in eine Offenstellung, in welcher zwischen der Tür und der Muffel zumindest ein Spalt ausgebildet ist, in dem Garraum enthaltene Luft gut in die Umgebung des Gargeräts abgeführt werden kann. Auch auf diese Weise lässt sich sehr einfach und gezielt die in dem Garraum herrschende Feuchte verringern.

Zusätzlich oder alternativ kann das zumindest eine Stellglied ein Verschlusselement umfassen, mittels welchem ein Garraumauslass zumindest bereichsweise freigebbar ist. Hierbei ist über den Garraumauslass aus dem Garraum stammende Luft einer Umgebung des Gargeräts zuführbar. Beispielsweise kann sich an den Garraumauslass ein Kanal anschließen, welcher in die Umgebung des Gargeräts mündet. Auch auf diese Weise kann die Feuchte in dem Garraum rasch verringert werden, wenn dies von der Steuerungseinrichtung bewirkt werden soll. Dies ist vorteilhaft.

Vorzugsweise umfasst das Gargerät wenigstens einen Feuchtesensor, mittels welchem die in dem Garraum herrschende Feuchte erfassbar ist. Hierbei ist die Steuerungseinrichtung des Gargeräts zum Auswerten eines Signals des wenigstens einen Feuchtesensors ausgebildet. Durch das Vorsehen des wenigstens einen Feuchtesensors lässt sich sehr zuverlässig kontrollieren, ob beziehungsweise wie rasch das Ansteuern des zumindest einen Stellglieds durch die Steuerungseinrichtung den gewünschten Erfolg mit sich bringt. Zudem erlaubt das Auswerten des Signals des wenigstens einen Feuchtesensors eine zuverlässige Regelung der Feuchte in dem Garraum.

Vorzugsweise ist die Steuerungseinrichtung des Gargeräts dazu ausgebildet, die zumindest eine thermochemische Wärmespeichereinrichtung und/oder das wenigstens eine Heizelement und/oder das zumindest eine Stellglied in Abhängigkeit von einer Abweichung eines Istwerts der Temperatur von einem Sollwert der Temperatur und/oder in Abhängigkeit von einer Abweichung eines Istwerts der Feuchte von einem Sollwert der Feuchte anzusteuern. Dies ist in vorteilhafter Weise einer zuverlässigen und raschen Regelung der Temperatur und/oder der Feuchte zuträglich.

Die Steuerungseinrichtung kann insbesondere dafür sorgen, dass zunächst ein Istwert der Temperatur auf den Sollwert der Temperatur gebracht wird und anschließend der Istwert der Feuchte auf den Sollwert der Feuchte. Es ist jedoch auch möglich, zunächst den Istwert der Feuchte auf den Sollwert der Feuchte zu bringen und anschließend den Istwert der Temperatur auf den Sollwert der Temperatur. Hierbei kann jeweils dem Umstand Rechnung getragen werden, dass sich der Istwert der Feuchte in Abhängigkeit von der Temperatur ändert. Insbesondere wenn daher zunächst die Feuchte auf den Sollwert eingestellt wird und anschließend die Temperatur verändert wird, kann ein entsprechendes Nachregeln der Feuchte von der Steuerungseinrichtung bewirkt werden.

In analoger Weise kann die Steuerungseinrichtung ein Nachregeln der Temperatur bewirken, wenn das Verändern der Feuchte eine Veränderung des Istwerts der Temperatur mit sich bringt.

Vorzugsweise ist die Steuerungseinrichtung des Gargeräts dazu ausgebildet, das zumindest eine Stellglied in Abhängigkeit von einer während eines Garprozesses stattfindenden Veränderung der Temperatur anzusteuern. Dies ist beispielsweise vorteilhaft, wenn im Rahmen des Garprozesses ein Automatikprogramm des Gargeräts abläuft, bei welchem die Steuerungseinrichtung das wenigstens eine Heizelement und/oder die zumindest eine thermochemische Wärmespeichereinrichtung ansteuert. Wenn zum Beispiel die Temperatur während des Garprozesses rasch erhöht wird, kann durch entsprechendes Erhöhen der absoluten Feuchte in dem Garraum die relative Feuchte zumindest weitgehend konstant gehalten werden. In analoger Weise kann durch eine rasche Temperaturabsenkung des Garprozesses, welche insbesondere durch das Ansteuern der thermochemischen Wärmespeichereinrichtung unterstützt sein kann, die Feuchte des neuen Betriebszustands eingestellt werden, indem das zumindest eine Stellglied von der Steuerungseinrichtung angesteuert wird. Dies ist vorteilhaft.

Zusätzlich oder alternativ kann die Steuerungseinrichtung des Gargeräts dazu ausgebildet sein, das zumindest eine Stellglied in Abhängigkeit von einer nach einem Beenden des Garprozesses stattfindenden Veränderung der Temperatur anzusteuern. Dem liegt die Erkenntnis zugrunde, dass nach dem Beenden des Garprozesses beispielsweise ein Nachgaren des sich in dem Garraum befindenden Garguts verhindert werden kann, etwa indem unterstützt durch die thermochemische Wärmespeichereinrichtung die Temperatur in dem Garraum sehr rasch abgesenkt wird. Indem die Steuerungseinrichtung das zumindest eine Stellglied ansteuert, kann hierbei beispielsweise ein unerwünschtes Feuchtwerden des Garguts verhindert werden. Eine solche Regulierung des Nachgarens nach dem Beenden des Garprozesses ist vorteilhaft.

Zusätzlich oder alternativ kann nach dem Beenden des Garprozesses durch die zumindest eine thermochemische Wärmespeichereinrichtung das Abkühlen des Garraums beschleunigt und somit unterstützt werden. So kann in dem Garraum sehr rasch eine Temperatur eingestellt werden, welche beispielsweise für einen in den Garraum hineingreifenden Nutzer des Gargeräts unproblematisch ist. Dies ist einer hohen Sicherheit im Betrieb des Gargeräts zuträglich.

Etwa für einen derartigen Abkühlbetrieb ist es vorteilhaft, dass durch das Ansteuern des zumindest einen Stellglieds ein Kondensatanfall in dem Garraum zumindest verringert werden kann. Hierfür kann durch das Ansteuern des zumindest einen Stellglieds die in dem Garraum herrschende Feuchte abgesenkt werden.

Zusätzlich oder alternativ kann die Steuerungseinrichtung des Gargeräts dazu ausgebildet sein, das zumindest eine Stellglied zum Einstellen der Feuchte während eines Warmhaltens von sich in dem Garraum befindendem Gargut anzusteuern. Dem liegt die Erkenntnis zugrunde, dass es beim Warmhalten von Gargut günstig ist, ein Austrocknen des Garguts und ein Feuchtwerden des Garguts zu vermeiden. Dies kann sehr einfach bewirkt werden, indem die Steuerungseinrichtung das zumindest eine Stellglied entsprechend ansteuert. Durch ein solches kontrolliertes Warmhalten können die Eigenschaften des Lebensmittels oder Gerichts, also des sich in dem Garraum befindenden Garguts, in vorteilhafter Weise stabil beziehungsweise konstant gehalten werden.

Die thermochemische Wärmespeichereinrichtung kann als sogenannter Sorptionsspeicher ausgebildet sein, bei welchem ein hygroskopisches Sorptionsmedium Wasserdampf aufnehmen und hierbei an der Oberfläche Wassermoleküle anlagern beziehungsweise adsorbieren kann. Hierbei wird Wärme frei. Zum Desorbieren der Wassermoleküle, also zum Trocknen des Sorptionsspeichers, ist demgegenüber Wärme in das Sorptionsmedium einzubringen. Die mittels eines solchen thermochemischen Sorptionsspeichers erreichbaren Veränderungen der Temperatur sind vergleichsweise begrenzt.

Vorzugsweise umfasst die zumindest eine thermochemische Wärmespeichereinrichtung ein Behältnis mit einem ersten Teilraum, in welchem in einem Ausgangszustand der thermochemischen Wärmespeichereinrichtung ein erster Feststoff aufgenommen ist. Hierbei ist der erste Feststoff durch Abgeben von in dem ersten Feststoff enthaltenem Wasser in einen zweiten Feststoff überführbar, welcher eine von dem ersten Feststoff verschiedene chemische Zusammensetzung aufweist. Durch Zugeben von Wasser zu dem zweiten Feststoff ist der erste Feststoff erzeugbar. Das Behältnis weist einen zweiten Teilraum zum Aufnehmen des abgegebenen Wassers auf, wobei durch Ansteuern eines Ventils der thermochemischen Wärmespeichereinrichtung ein Trennen der beiden Teilräume voneinander oder ein Verbinden der beiden Teilräume miteinander bewirkbar ist. Eine derartige thermochemische Wärmespeichereinrichtung, bei welcher der erste Feststoff und der zweite Feststoff voneinander verschiedene chemische Zusammensetzungen aufweisen, ist im Hinblick auf ein Aufnehmen einer großen Wärmemenge zum raschen Abkühlen des Garraums und hinsichtlich einer sehr starken Freisetzung von Wärme zum Zwecke des Aufheizens des Garraums besonders vorteilhaft.

Beispielsweise kann der erste Feststoff durch ein Hydrat von Calciumoxalat bereitgestellt sein. Das Hydrat des Calciumoxalats kann beispielsweise in Form eines Pulvers in dem ersten Teilraum des Behältnisses aufgenommen sein. Durch Erhitzen kann aus dem Hydrat wasserfreies Calciumoxalat und somit der zweite Feststoff gebildet werden. Bei geöffnetem Ventil kann das bei der endothermen Reaktion abgegebene Wasser in den zweiten Teilraum in Form von Wasserdampf einströmen. Anschließend kann die Steuerungseinrichtung ein Schließen des Ventils bewirken. Und durch Öffnen des Ventils kann die exotherme Wasseraufnahme des zweiten Feststoffs in Form des (zumindest nahezu) wasserfreien Calciumoxalats bewirkt werden. Dies führt zu einer sehr starken Freisetzung von Wärme.

Die thermochemische Wärmespeichereinrichtung, bei welcher der erste Feststoff und der zweite Feststoff voneinander verschiedene chemische Zusammensetzungen aufweisen, ist im Hinblick auf die starke Wärmeabgabe bei der exothermen Reaktion, bei welcher das Wasser aufgenommen wird, und die entsprechend große Wärmeaufnahme bei der endothermen Reaktion, bei welcher das Wasser abgegeben wird, besonders vorteilhaft.

Bei dem erfindungsgemäßen Verfahren zum Betreiben eines Gargeräts mit einem Garraum, welcher in einer Muffel des Gargeräts ausgebildet ist, ist an wenigstens einer Wandung der Muffel zumindest eine thermochemische Wärmespeichereinrichtung angeordnet. Eine Steuerungseinrichtung des Gargeräts steuert die zumindest eine thermochemische Wärmespeichereinrichtung und/oder wenigstens ein Heizelement des Gargeräts an. Durch das Ansteuern der zumindest einen thermochemischen Wärmespeichereinrichtung ist ein Verändern einer in dem Garraum herrschenden Temperatur zumindest unterstützbar. Die Steuerungseinrichtung steuert zumindest ein Stellglied des Gargeräts an, wobei das zumindest eine Stellglied zum Verändern einer in dem Garraum herrschenden Feuchte ausgebildet ist. Durch das Ansteuern des Stellglieds wird also die in dem Garraum herrschende Feuchte verändert. Demzufolge ermöglicht das Verfahren eine verbesserte Veränderung des Garraumklimas.

Die für das erfindungsgemäße Gargerät beschriebenen Vorteile und bevorzugten Ausführungsformen gelten in analoger Weise für das erfindungsgemäße Verfahren und umgekehrt.

Mit Angaben wie "oben", "unten", "vorne", "hinten, "horizontal", "vertikal", "Tiefenrichtung", "Breitenrichtung", "Hochrichtung" und dergleichen sind die bei bestimmungsgemäßem Gebrauch und bestimmungsgemäßem Anordnen des Gargeräts und bei einem dann insbesondere vor dem Gargerät stehenden und in Richtung des Gargeräts blickenden Beobachter gegebenen Positionen und Orientierungen angegeben.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind. Es sind somit auch Ausführungen und Merkmalskombinationen als offenbart anzusehen, die nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: in einer schematischen Perspektivansicht ein Gargerät mit einem Garraum, wobei eine Tür des Gargeräts teilweise geöffnet ist;
- Fig. 2: eine schematische Schnittansicht des Gargeräts, welches eine Vielzahl von Stellgliedern aufweist, mittels welchen sich eine in dem Garraum herrschende Feuchte verändern lässt;
- Fig. 3: ein Ablaufdiagramm, welches eine mögliche Vorgehensweise bei der Regelung der in dem Garraum herrschenden Feuchte und der in dem Garraum herrschenden Temperatur veranschaulicht; und
- Fig. 4: schematisch und ausschnittsweise eine Wandung einer Muffel des Gargeräts, wobei eine thermochemische Wärmespeichereinrichtung an der Wandung angeordnet ist.

In den Figuren sind gleiche oder funktionsgleiche Elemente mit identischen Bezugszeichen versehen.

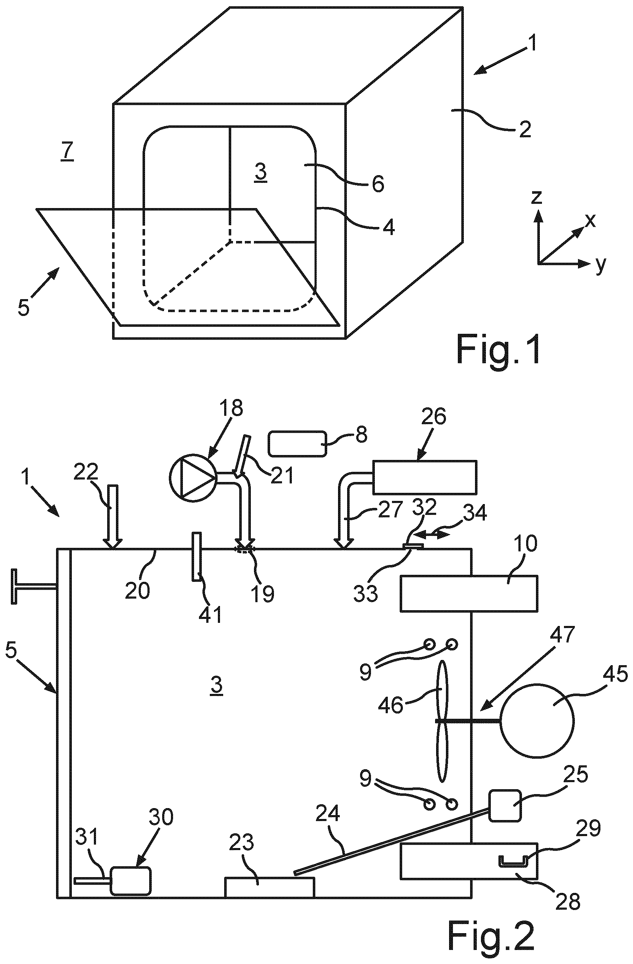

In Fig. 1 ist schematisch und perspektivisch ein Gargerät 1 gezeigt, welches ein Gehäuse 2 aufweist. Durch das Gehäuse 2 ist das Gargerät 1 zu einer Umgebung 7 des Gargeräts 1 hin begrenzt. Ein Garraum 3 des Gargeräts 1 ist durch eine Muffel 4 begrenzt, welche frontseitig mittels einer Tür 5 des Gargeräts 1 verschlossen werden kann. In Fig. 1 ist die Tür 5 in einer teilweise geöffneten Stellung gezeigt. Demgegenüber ist die Tür 5 in Fig. 2 in ihrer Geschlossenstellung gezeigt, in welcher die Tür 5 den Garraum 3 frontseitig verschließt. Die Tür 5 liegt somit einer Rückwand 6 der Muffel 4 in Tiefenrichtung x des Gargeräts 1 gegenüber. Die Tiefenrichtung x, eine Breitenrichtung y des beispielsweise als Backofen und/oder als Dampfgarer ausgebildeten Gargeräts 1 sowie eine Hochrichtung z des Gargeräts 1 sind in Fig. 1 und in Fig. 2 durch ein jeweiliges Koordinatensystem veranschaulicht.

In Fig. 2 ist das Gehäuse 2 aus Gründen der Übersichtlichkeit nicht näher dargestellt. Jedoch ist eine beispielsweise als Steuergerät ausgebildete Steuerungseinrichtung 8 des Gargeräts 1 schematisch gezeigt, mittels welcher sich eine in dem Garraum 3 herrschende Temperatur sowie eine in dem Garraum 3 herrschende Feuchte einstellen lassen, insbesondere regeln lassen. Beispielhaft ist in Fig. 2 ein Heizelement 9 gezeigt, welches die Steuerungseinrichtung 8 ansteuern kann, um die Temperatur im Garraum 3 zu erhöhen. Ebenso kann das Steuerungseinrichtung das wenigstens eine Heizelement 9 beziehungsweise einen derartigen, vorzugsweise elektrischen, Heizkörper abschalten oder mit einer verringerten Leistung betreiben, um die Temperatur in dem Garraum 3 abzusenken.

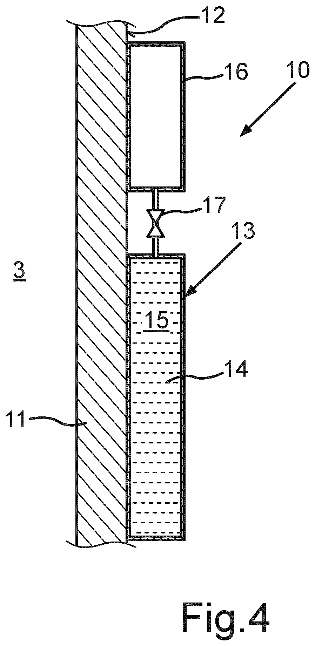

Zum Verändern der in dem Garraum 3 herrschenden Temperatur kann die Steuerungseinrichtung 8 außerdem eine thermochemische Wärmespeichereinrichtung 10 ansteuern, deren Funktionsweise mit Bezug auf Fig. 4 erläutert werden soll. Die wenigstens eine thermochemische Wärmespeichereinrichtung 10 ist vorzugsweise an einer Wandung 11 der Muffel 4 angeordnet, beispielsweise an einer Außenseite 12 einer als Seitenwand oder als die Rückwand 6 der Muffel 4 ausgebildeten Wandung 11. Die Wärmespeichereinrichtung 10 umfasst ein Behältnis 13 mit einem ersten Teilraum 14, in welchem ein erster Feststoff 15 aufgenommen ist. Der erste Feststoff 15 kann beispielsweise durch ein Hydrat von Calciumoxalat bereitgestellt sein, etwa in Form eines Pulvers des Hydrats, wobei in dem Hydrat Wasser in Form von Kristallwasser enthalten sein kann. Das Behältnis 13 umfasst einen zweiten Teilraum 16, welcher dem Aufnehmen des beim Erwärmen des ersten Feststoffs 15 abgegebenen Wassers dient.

In Fig. 4 ist ein Ausgangszustand der Wärmespeichereinrichtung 10 gezeigt, in welchem in dem ersten Teilraum 14 der erste Feststoff 15 noch als das Hydrat vorliegt, und sich in dem zweiten Teilraum 16 noch kein Wasser in Form von Wasserdampf befindet. Durch Aufheizen des ersten Feststoffs 15 kann der erste Feststoff 15 in einen zweiten Feststoff überführt werden, welcher eine von dem ersten Feststoff 15 verschiedene chemische Zusammensetzung aufweist. Beispielsweise kann aus dem Hydrat des Calciumoxalats wasserfreies Calciumoxalat gebildet werden. Hierbei ist durch das wasserfreie Calciumoxalat der zweite Feststoff bereitgestellt. Diese Reaktion des Freisetzens von Kristallwasser aus dem ersten Feststoff 15 führt bei geöffnetem Ventil 17 der Wärmespeichereinrichtung 10 zu einem Einströmen von Wasserdampf in den zweiten Teilraum 16. Ein solches Aufladen der Wärmespeichereinrichtung 10, also das endotherme Überführen des ersten Feststoffs 15 in den zweiten Feststoff, geht mit einer starken Aufnahme von Wärme aus dem Garraum 3 einher. Dementsprechend lässt sich durch das Aufladen der Wärmespeichereinrichtung 10 ein besonders rasches Abkühlen des Garraums 3 bewirken.

Die Steuerungseinrichtung 8 kann das Ventil 17 ansteuern, um den ersten Teilraum 14 mit dem zweiten Teilraum 16 zu verbinden oder die beiden Teilräume 14, 16 voneinander zu trennen. Wenn sich der Wasserdampf in dem zweiten Teilraum 16 befindet, kann durch Öffnen des Ventils 17 die exotherme Reaktion stattfinden, bei welcher der sich in dem ersten Teilraum 14 befindende zweite Feststoff in den ersten Feststoff 15 überführt wird, indem der zweite Feststoff das aus dem zweiten Teilraum 16 stammende Wasser aufnimmt. Diese stark exotherme Reaktion kann genutzt werden, um das Aufheizen des Garraums 3 zumindest zu unterstützen. Beispielsweise kann die Steuerungseinrichtung 8 zum einen das wenigstens eine Heizelement 9 ansteuern, um die Temperatur im Garraum 3 zu erhöhen. Wenn hierbei zusätzlich das Ventil 17 der Wärmespeichereinrichtung 10 angesteuert wird, so geht das Erhöhen der Temperatur in dem Garraum 3 besonders rasch vonstatten. Alternativ kann mittels der Wärmespeichereinrichtung 10 ein Vorheizen des Garraums 3 bewirkt werden, bevor das wenigstens eine Heizelement 9 eingeschaltet wird.

Insbesondere wenn nach einem Abschalten oder einem Verringern einer Leistungsabgabe des wenigstens einen Heizelements 9 die Temperatur im Garraum 3 sinkt, kann durch die Nutzung der thermochemischen Wärmespeichereinrichtung 10 diese Absenkung der Temperatur besonders stark beschleunigt werden. Vorliegend bewirkt die Steuerungseinrichtung 8 eine entsprechend rasche oder starke Änderung des Garraumklimas oder der Garraumatmosphäre im Hinblick auf die Temperatur und die Feuchte besonders präzise und auf kontrollierte Art und Weise.

Dem liegt die Erkenntnis zugrunde, dass eine starke Veränderung der Garraumatmosphäre beziehungsweise des Garraumklimas eine starke Änderung sowohl der Temperatur als auch der Feuchte in dem Garraum 3 mit sich bringen kann. Vorliegend kann jedoch von der Steuerungseinrichtung 8 nicht nur auf die in dem Garraum 3 herrschende Temperatur aktiv Einfluss genommen werden, sondern auch auf die in dem Garraum 3 herrschende Feuchte. Zum Verändern der in dem Garraum 3 herrschenden Feuchte kann die Steuerungseinrichtung 8 zumindest ein Stellglied des Gargeräts 1 ansteuern. Beispielhaft sind in Fig. 2 mehrere zu diesem Zweck nutzbare Stellglieder des Gargeräts 1 schematisch gezeigt, welche nachfolgend erläutert werden sollen.

Beispielsweise kann die Änderung der Feuchte in dem Garraum 3 bewirkt werden, indem in den Garraum 3 Zuluft, insbesondere in Form von aus der Umgebung 7 des Gargeräts 1 stammender Umgebungsluft, eingebracht wird. Dementsprechend kann das zumindest eine Stellglied als einen Lüfter umfassende Zuführeinrichtung 18 ausgebildet sein, mittels welcher aus der Umgebung 7 des Gargeräts 1 stammende Zuluft über zumindest eine Mündungsöffnung 19 in den Garraum 3 eingebracht werden kann. Die in einer Wandung der Muffel 4 ausgebildete Mündungsöffnung 19 ist in Fig. 2 lediglich schematisch im Hinblick auf ihre Lage gezeigt. Dementsprechend kann die wenigstens eine Mündungsöffnung 19 beispielsweise in einer Decke 20 der Muffel 4 und/oder in der Rückwand 6 der Muffel 4 und/oder in einer der Seitenwände der Muffel 4 angeordnet sein. Gemäß Fig. 2 kann die Zuführeinrichtung 18 ein Dosierelement 21 umfassen, welches dazu ausgebildet ist, Wasser oder Wassertröpfchen in die Zuluft einzubringen, welche an der Mündungsöffnung 19 in den Garraum 3 eintritt.

Als weiteres Stellglied ist in Fig. 2 schematisch eine Einspritzvorrichtung 22 gezeigt, mittels welcher direkt Wassertröpfchen und/oder Wasser in den Garraum 3 eingespritzt werden können. Insbesondere können von der Einspritzvorrichtung 22 Wassertröpfchen als Sprühnebel in den Garraum 3 eingebracht werden.

Als weiteres Stellglied ist in Fig. 2 schematisch ein interner Verdampfer 23 gezeigt, also ein in dem Garraum 3 angeordneter Verdampfer 23. Zudem ist in Fig. 2 eine Zuleitung 24 dargestellt, über welche aus einem Vorratsbehälter 25 stammendes Wasser dem Verdampfer 23 oder internen Verdampfer 23 zugeführt werden kann.

Als weiteres Stellglied ist in Fig. 2 schematisch ein externer Verdampfer 26 gezeigt, also ein außerhalb des Garraums 3 angeordneter Verdampfer 26. Der externe Verdampfer 26 umfasst eine Dampfleitung 27, über welche Wasserdampf in den Garraum 3 eingebracht werden kann.

Als weiteres Stellglied ist in Fig. 2 schematisch eine Kondensatfalle gezeigt, welche eine Kühleinrichtung 28 zum Abkühlen von aus dem Garraum 3 stammenden Wrasen und eine Auffangeinrichtung 29 umfasst. In der Auffangeinrichtung 29 kann Kondensat aufgefangen werden, welches durch das Abkühlen des Wrasens erzeugt wird. Durch Betreiben einer solchen Kondensatfalle lässt sich sehr gut die in dem Garraum 3 herrschende Feuchte verringern.

Als weiteres Stellglied ist in Fig. 2 schematisch ein Aktuator 30 gezeigt, welcher dazu ausgebildet ist, die Tür 5 des Gargeräts 1 zumindest ein Stück weit zu öffnen. Beispielsweise kann ein Betätigungselement 31 des Aktuators 30 gegen eine Innenseite der Tür 5 drücken, um die Tür 5 in eine Offenstellung zu bewegen, in welcher zwischen der Tür 5 und einem Garraumflansch zumindest ein Spalt ausgebildet ist. Auch dadurch kann die in dem Garraum 3 herrschende Feuchte gezielt verändert werden.

Als weiteres Stellglied ist in Fig. 2 schematisch ein Verschlusselement 32 gezeigt, welches dazu ausgebildet ist, einen Garraumauslass 33 zumindest bereichsweise freizugeben. Beispielsweise kann das Verschlusselement 32 als Klappe und/oder als Schieber und/oder als Ventil ausgebildet sein. Eine Verschiebebewegung des Verschlusselements 32 ist in Fig. 2 durch einen Doppelpfeil 34 veranschaulicht.

Durch Ansteuern zumindest eines der vorstehend beispielhaft genannten Stellglieder durch die Steuerungseinrichtung 8 kann gezielt die in dem Garraum 3 herrschende Feuchte verändert werden.

Anwendungsfälle, in welchen die Steuerungseinrichtung 8 die Temperatur und die Feuchte in dem Garraum 3 regelt, sollen nachfolgend beispielhaft erläutert werden. So kann etwa während eines Automatikprogramms, welches in dem Garraum 3 des Gargeräts 1 abläuft, eine starke Änderung der Temperatur stattfinden. Beispielhaft soll davon ausgegangen werden, dass während des Garprozesses eine starke Absenkung der Temperatur stattfindet. Diese starke Absenkung der Temperatur in dem Garraum 3 kann durch die thermochemische Wärmespeichereinrichtung 10 besonders gut unterstützt werden. Um zu verhindern, dass die relative Feuchte in dem Garraum 3 unerwünscht stark ansteigt, kann die Steuerungseinrichtung 8 durch Ansteuern des zumindest einen Stellglieds die in dem Garraum 3 herrschende Feuchte entsprechend einstellen, insbesondere regeln. Beispielsweise kann über die Zuführeinrichtung 18 trockene Zuluft in den Garraum 3 eingebracht werden, um ein zu starkes Ansteigen der relativen Feuchte in dem Garraum 3 während des Abkühlens zu vermeiden.

Analoges gilt, wenn nach Beendigung eines in dem Garraum 3 stattfindenden Garprozesses der Garraum 3 rasch abgekühlt werden soll, etwa um zu erreichen, dass ein in den Garraum 3 hineingreifender Nutzer des Gargeräts 1 problemlos eine Innenseite wenigstens einer Wandung 11 der Muffel 4 berühren kann. Um bei einem derartigen, insbesondere mit Hilfe der thermochemischen Wärmespeichereinrichtung 10 beschleunigten, Abkühlen des Garraums 3 eine Kondensatbildung in dem Garraum 3 zu vermeiden, kann durch Regelung der Zuluft beispielsweise die Luftaustauschrate in dem Garraum 3 erhöht werden. Es kann also vermehrt Zuluft über die Zuführeinrichtung 18 zugeführt und entsprechend sich bereits in dem Garraum 3 befindende Abluft aus dem Garraum 3 abgeführt werden. Durch eine Zufuhr von trockener Zuluft in den Garraum 3 kann außerdem eine Verdunstung von bereits im Garraum 3 vorhandenem Kondensat gefördert werden. Das Abführen von feuchter Luft aus dem Garraum 3 kann beispielsweise durch partielles Öffnen der Tür 5 und/oder durch Freigeben des Garraumauslasses 33 bewirkt werden.

Durch entsprechendes Ansteuern des jeweiligen Stellglieds kann die Feuchte oder Feuchtigkeit in dem Garraum 3 entsprechend der jeweils aktuellen Temperatur und entsprechend der Taupunkttemperatur angepasst werden, insbesondere geregelt werden. Dadurch kann besonders weitgehend vermieden werden, dass es in dem Abkühlprozess zu einer weiteren Kondensation von Feuchte, also zur Bildung von flüssigem Wasser in dem Garraum 3 kommt.

Des Weiteren kann nach einem Beenden eines Garprozesses ein Nachgaren von sich in dem Garraum 3 befindendem Gargut reguliert werden. Beispielsweise kann durch rasches Absenken der in dem Garraum 3 herrschenden Temperatur ein unerwünschtes Nachgaren des Garguts vermieden werden. Das rasche Absenken der in dem Garraum 3 herrschenden Temperatur kann insbesondere mittels der thermochemischen Wärmespeichereinrichtung 10 unterstützt und dadurch beschleunigt werden. Auch hierbei kann von der Steuerungseinrichtung 8 dafür gesorgt werden, dass die relative Feuchte in dem Garraum 3 nicht unerwünscht stark ansteigt. Zu diesem Zweck kann die Steuerungseinrichtung 8 zumindest eines der Stellglieder ansteuern, welche ein Verringern der in dem Garraum 3 herrschenden Feuchte bewirken können.

Des Weiteren kann die Feuchte während eines Warmhaltens von sich in dem Garraum 3 befindendem Gargut eingestellt werden, indem die Steuerungseinrichtung 8 das zumindest eine Stellglied ansteuert. Beispielsweise kann zum Erreichen einer zum Warmhalten des Garguts geeigneten Temperatur die thermochemische Wärmespeichereinrichtung 10 dafür sorgen, dass eine Zieltemperatur besonders rasch und effizient erreicht wird. Des Weiteren kann durch Ansteuern des zumindest einen Stellglieds die in dem Garraum 3 herrschende Feuchte eingestellt, insbesondere geregelt werden. So wird dafür gesorgt, dass es weder zu einem Austrocknen des warmgehaltenen Garguts noch zu einem unerwünscht starken Feuchtwerden des warmgehaltenen Garguts kommt.

Vorliegend kann demnach die Steuerungseinrichtung 8 sowohl die in dem Garraum 3 herrschende Temperatur als auch die in dem Garraum 3 herrschende Feuchte kombiniert regeln. Das Regeln der Feuchte kann insbesondere durch gezieltes Belüften des Garraums 3, also etwa durch Ansteuern der Zuführeinrichtung 18, und/oder durch Nutzung eines der Verdampfer 23, 26 und/oder durch Ansteuern der Einspritzvorrichtung 22 realisiert werden. Indirekt wird die in dem Garraum 3 herrschende Luftfeuchte auch über die Temperatur im Garraum beeinflusst.

Zur Regelung der in dem Garraum 3 herrschenden Temperatur kann die Steuerungseinrichtung 8 die thermochemische Wärmespeichereinrichtung 10 und das wenigstens eine Heizelement 9 ansteuern. Zudem ist zu berücksichtigen, dass das Einbringen von Zuluft und/oder das Nutzen des wenigstens einen Verdampfers 23, 26 auch einen großen Einfluss auf die in dem Garraum 3 herrschende Temperatur haben.

Vom zeitlichen Ablauf her können die Temperaturregelung und die Feuchteregelung zeitgleich stattfinden oder nacheinander. Beispielsweise kann zuerst unterstützt durch die thermochemische Wärmespeichereinrichtung 10 die Temperatur in dem Garraum 3 abgesenkt werden, und anschließend kann die Feuchte in dem Garraum 3 geregelt werden, etwa indem trockene Zuluft in den Garraum 3 eingebracht wird.

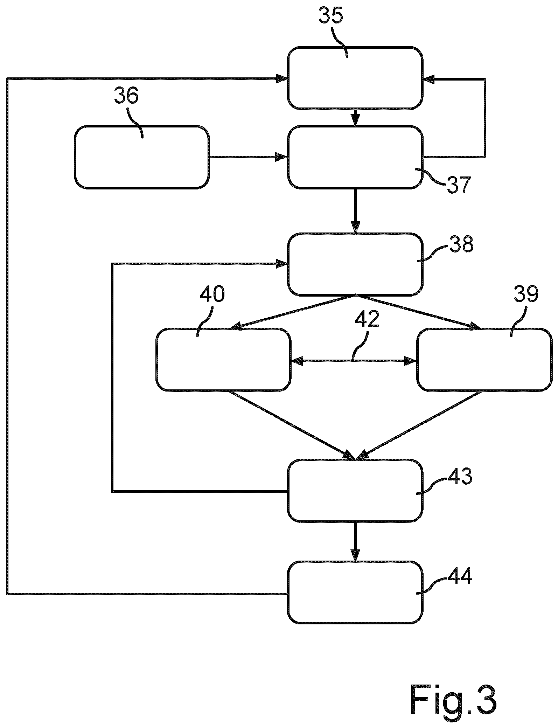

Ein beispielhafter Regelungsprozess, welcher von der Steuerungseinrichtung 8 durchgeführt werden kann, soll mit Bezug auf Fig. 3 erläutert werden. In Fig. 3 veranschaulicht ein erster Block 35 die Betriebsart des Gargeräts 1, also beispielsweise einen gerade in dem Garraum 3 stattfindenden Garprozess. Im laufenden Betrieb des Gargeräts 1 kann es zu einem Verändern 36 eines Sollwerts der Temperatur in dem Garraum 3 und/oder eines Sollwerts der Feuchte in dem Garraum 3 kommen. Das Verändern 36 kann beispielsweise durch einen Nutzer des Gargeräts 1 bewirkt werden oder von der Steuerungseinrichtung 8, welche ein Durchführen des Garprozesses nach einem Automatikprogramm oder dergleichen voreingestelltem Programm bewirkt.

Daraufhin nimmt die Steuerungseinrichtung 8 einen Abgleich 37 des Istwerts mit dem neuen oder geänderten Sollwert vor. Bei einem positiven Abgleich geht das Verfahren zurück zum Block 35. Bei einem negativen Abgleich stellt die Steuerungseinrichtung 8 demgegenüber fest, dass eine Änderung des in dem Garraum 3 herrschenden Klimas bewirkt werden soll. Die entsprechende Feststellung 38, dass eine Änderung des Klimas in dem Garraum 3 zu bewirken ist, ist in Fig. 3 durch einen weiteren Block veranschaulicht.

Gemäß Fig. 3 nimmt die Steuerungseinrichtung 8 im Anschluss an die Feststellung 38 sowohl eine Temperaturregelung 39 als auch eine Feuchteregelung 40 vor. Im Zuge der Temperaturregelung 39 kann mittels wenigstens eines (vorliegend nicht gezeigten) Temperatursensors des Gargeräts 1 die Temperatur im Garraum 3 erfasst werden. Des Weiteren weist das Gargerät 1 vorzugsweise wenigstens einen Feuchtesensor 41 auf (vergleiche Fig. 2), dessen Signale von der Steuerungseinrichtung 8 ausgewertet werden können, um die Feuchteregelung 40 vorzunehmen.

Um die Temperaturregelung 39 zu bewirken, kann die Steuerungseinrichtung 8 die thermochemische Wärmespeichereinrichtung 10 und/oder das wenigstens eine Heizelement 9 ansteuern. Und zum Zwecke der Feuchteregelung 40 kann die Steuerungseinrichtung 8 wenigstens eines der mit Bezug auf Fig. 2 erläuterten Stellglieder ansteuern. In Fig. 3 ist durch einen Doppelpfeil 42 eine zwischen der Temperaturregelung 39 und der Feuchteregelung 40 bestehende Wechselwirkung veranschaulicht.

Im Anschluss an die Temperaturregelung 39 und die Feuchteregelung 40 führt die Steuerungseinrichtung 8 ein erneutes Vergleichen 43 des Istwerts der Temperatur mit dem Sollwert der Temperatur und des Istwerts der Feuchte mit dem Sollwert der Feuchte durch. Ist der Abgleich negativ, so geht das Verfahren zurück zu der Feststellung 38, dass weiterhin eine Änderung des Garraumklimas vorzunehmen ist. Ist der Abgleich oder das Vergleichen 43 demgegenüber positiv, so kommt es zu einer Beendigung 44 der Änderung des in dem Garraum 3 herrschenden Klimas. Mit anderen Worten ist dann die Änderung des Garraumklimas abgeschlossen, und das Verfahren geht zurück zum Block 35. Ein positiver Abgleich bedeutet demnach, dass noch eine zu behebende Abweichung des jeweiligen Istwerts von dem jeweiligen Sollwert vorliegt. Und ein negativer Abgleich bedeutet somit, dass der Istwert (zumindest weitgehend) dem angestrebten Sollwert entspricht.

In Fig. 2 ist ein außerdem Elektromotor 45 schematisch gezeigt, welcher zum Antreiben eines Lüfterrads 46 eines Garraumgebläses oder Garraumlüfters 47 des Gargeräts 1 ausgebildet ist. Das Lüfterrad 46 kann in die Tiefenrichtung x des Gargeräts 1 gesehen hinter einem (nicht gezeigten) Abschirmblech oder dergleichen Abschirmeinrichtung angeordnet sein. Dadurch ist sichergestellt, dass das Lüfterrad 46 für einen in den Garraum 3 hineingreifenden Nutzer nicht zugänglich ist. Das wenigstens eine Heizelement 9 kann gemäß Fig. 2 als um das Lüfterrad 46 in Umfangsrichtung umlaufender Heizkörper ausgebildet sein.

Insgesamt zeigen die Beispiele, wie ein Kombinationsverfahren bereitgestellt werden kann, bei welchem die wenigstens eine thermochemische Wärmespeichereinrichtung 10 und eine Feuchtigkeitsregulation zur Änderung des Garraumklimas verwendet werden können.

### Bezugszeichenliste

- 1: Gargerät
- 2: Gehäuse
- 3: Garraum
- 4: Muffel
- 5: Tür
- 6: Rückwand
- 7: Umgebung
- 8: Steuerungseinrichtung
- 9: Heizelement
- 10: Wärmespeichereinrichtung
- 11: Wandung
- 12: Außenseite
- 13: Behältnis
- 14: Teilraum
- 15: Feststoff
- 16: Teilraum
- 17: Ventil
- 18: Zuführeinrichtung
- 19: Mündungsöffnung
- 20: Decke
- 21: Dosierelement
- 22: Einspritzvorrichtung
- 23: Verdampfer
- 24: Zuleitung
- 25: Vorratsbehälter
- 26: Verdampfer
- 27: Dampfleitung
- 28: Kühleinrichtung
- 29: Auffangeinrichtung
- 30: Aktuator
- 31: Betätigungselement
- 32: Verschlusselement
- 33: Garraumauslass
- 34: Doppelpfeil
- 35: Block
- 36: Verändern
- 37: Abgleich
- 38: Feststellung
- 39: Temperaturregelung
- 40: Feuchteregelung
- 41: Feuchtesensor
- 42: Doppelpfeil
- 43: Vergleichen
- 44: Beendigung
- 45: Elektromotor
- 46: Lüfterrad
- 47: Garraumlüfter

## Patentansprüche

1. Gargerät (1) mit einem Garraum (3), welcher in einer Muffel (4) des Gargeräts (1) ausgebildet ist, wobei an wenigstens einer Wandung (11) der Muffel (4) zumindest eine thermochemische Wärmespeichereinrichtung (10) angeordnet ist, wobei eine Steuerungseinrichtung (8) des Gargeräts (1) zum Ansteuern der zumindest einen thermochemischen Wärmespeichereinrichtung (10) und zum Ansteuern wenigstens eines Heizelements (9) des Gargeräts (1) ausgebildet ist, wobei durch das Ansteuern der zumindest einen thermochemischen Wärmespeichereinrichtung (10) ein Verändern einer in dem Garraum (3) herrschenden Temperatur zumindest unterstützbar ist, **dadurch gekennzeichnet, dass** das Gargerät (1) zumindest ein von der Steuerungseinrichtung (8) ansteuerbares Stellglied (18, 22, 23, 26, 28, 30, 32) aufweist, welches zum Verändern einer in dem Garraum (3) herrschenden Feuchte ausgebildet ist.

2. Gargerät (1) nach Anspruch 1, **dadurch gekennzeichnet, dass** das zumindest eine Stellglied eine Zuführeinrichtung (18) umfasst, mittels welcher aus einer Umgebung (7) des Gargeräts (1) stammende Zuluft über zumindest eine Mündungsöffnung (19) in den Garraum (3) einbringbar ist, wobei die zumindest eine Mündungsöffnung (19) in der Muffel (4) ausgebildet ist.

3. Gargerät (1) nach Anspruch 2, **dadurch gekennzeichnet, dass** die Zuführeinrichtung (18) wenigstens ein Dosierelement (21) umfasst, welches dazu ausgebildet ist, Wasser, insbesondere Wassertröpfchen, in die Zuluft einzubringen.

4. Gargerät (1) nach einem der vorhergehenden Ansprüche, **dadurch gekennzeichnet, dass** das zumindest eine Stellglied eine Einspritzvorrichtung (22) umfasst, welche dazu ausgebildet ist, Wassertröpfchen und/oder Wasser in den Garraum (3) einzuspritzen.

5. Gargerät (1) nach einem der vorhergehenden Ansprüche, **dadurch gekennzeichnet, dass** das zumindest eine Stellglied einen in dem Garraum (3) angeordneten Verdampfer (23) umfasst, welcher zum Verdampfen von Wasser ausgebildet ist, wobei das Gargerät (1) zumindest eine Zuleitung (24) umfasst, mittels welcher der Verdampfer (23) mit dem zu verdampfenden Wasser beaufschlagbar ist.

6. Gargerät (1) nach einem der vorhergehenden Ansprüche, **dadurch gekennzeichnet, dass** das zumindest eine Stellglied einen außerhalb des Garraums (3) angeordneten Verdampfer (26) umfasst, welcher zum Verdampfen von Wasser ausgebildet ist, wobei der Verdampfer eine Dampfleitung (27) aufweist, über welche Wasserdampf in den Garraum (3) einbringbar ist.

7. Gargerät (1) nach einem der vorhergehenden Ansprüche, **dadurch gekennzeichnet, dass** das zumindest eine Stellglied eine Kühleinrichtung (28) zum Abkühlen von aus dem Garraum (3) stammendem Wrasen und eine Auffangeinrichtung (29) umfasst, wobei die Auffangeinrichtung (29) zum Auffangen von Kondensat ausgebildet ist, welches durch das Abkühlen des Wrasens erzeugbar ist.

8. Gargerät (1) nach einem der vorhergehenden Ansprüche, **dadurch gekennzeichnet, dass** das zumindest eine Stellglied einen Aktuator (30) umfasst, welcher dazu ausgebildet ist, eine Tür (5) des Gargeräts (1) zumindest bereichsweise zu öffnen, wobei der Garraum (3) mittels der Tür (5) verschließbar ist.

9. Gargerät (1) nach einem der vorhergehenden Ansprüche, **dadurch gekennzeichnet, dass** das zumindest eine Stellglied ein Verschlusselement (32) umfasst, mittels welchem ein Garraumauslass (33) zumindest bereichsweise freigebbar ist, wobei über den Garraumauslass (33) aus dem Garraum (3) stammende Luft einer Umgebung (7) des Gargeräts (1) zuführbar ist.

10. Gargerät (1) nach einem der vorhergehenden Ansprüche, **dadurch gekennzeichnet, dass** das Gargerät (1) wenigstens einen Feuchtesensor (41) umfasst, mittels welchem die in dem Garraum (3) herrschende Feuchte erfassbar ist, wobei die Steuerungseinrichtung (8) des Gargeräts (1) zum Auswerten eines Signals des wenigstens einen Feuchtesensors (41) ausgebildet ist.

11. Gargerät (1) nach einem der vorhergehenden Ansprüche, **dadurch gekennzeichnet, dass** die Steuerungseinrichtung (8) des Gargeräts (1) dazu ausgebildet ist, die zumindest eine thermochemische Wärmespeichereinrichtung (10) und/oder das wenigstens eine Heizelement (9) und/oder das zumindest eine Stellglied (18, 22, 23, 26, 28, 30, 32) in Abhängigkeit von einer Abweichung eines Istwerts der Temperatur von einem Sollwert der Temperatur und/oder in Abhängigkeit von einer Abweichung eines Istwerts der Feuchte von einem Sollwert der Feuchte anzusteuern.

12. Gargerät (1) nach einem der vorhergehenden Ansprüche, **dadurch gekennzeichnet, dass** die Steuerungseinrichtung (8) des Gargeräts (1) dazu ausgebildet ist, das zumindest eine Stellglied (18, 22, 23, 26, 28, 30, 32) in Abhängigkeit von einer während eines Garprozesses stattfindenden Veränderung der Temperatur und/oder in Abhängigkeit von einer nach einem Beenden eines Garprozesses stattfindenden Veränderung der Temperatur und/oder zum Einstellen der Feuchte während eines Warmhaltens von sich in dem Garraum (3) befindendem Gargut anzusteuern.

13. Gargerät (1) nach einem der vorhergehenden Ansprüche, **dadurch gekennzeichnet, dass** die zumindest eine thermochemische Wärmespeichereinrichtung (10) ein Behältnis (13) mit einem ersten Teilraum (14) umfasst, in welchem in einem Ausgangszustand der thermochemischen Wärmespeichereinrichtung (10) ein erster Feststoff (15) aufgenommen ist, wobei der erste Feststoff (15) durch Abgeben von in dem ersten Feststoff (15) enthaltenem Wasser in einen zweiten Feststoff überführbar ist, welcher eine von dem ersten Feststoff (15) verschiedene chemische Zusammensetzung aufweist, wobei durch Zugeben von Wasser zu dem zweiten Feststoff der erste Feststoff (15) erzeugbar ist, wobei das Behältnis (13) einen zweiten Teilraum (16) zum Aufnehmen des abgegebenen Wassers aufweist, und wobei durch Ansteuern eines Ventils (17) der thermochemischen Wärmespeichereinrichtung (10) ein Trennen der beiden Teilräume (14, 16) voneinander oder ein Verbinden der beiden Teilräume (14, 16) miteinander bewirkbar ist.

14. Verfahren zum Betreiben eines Gargeräts (1) mit einem Garraum (3), welcher in einer Muffel (4) des Gargerät (1) ausgebildet ist, wobei an wenigstens einer Wandung (11) der Muffel (4) zumindest eine thermochemische Wärmespeichereinrichtung (10) angeordnet ist, wobei eine Steuerungseinrichtung (8) des Gargeräts (1) die zumindest eine thermochemische Wärmespeichereinrichtung (10) und/oder wenigstens ein Heizelement (9) des Gargeräts (1) ansteuert, wobei durch das Ansteuern der zumindest einen thermochemischen Wärmespeichereinrichtung (10) ein Verändern einer in dem Garraum (3) herrschenden Temperatur zumindest unterstützbar ist, **dadurch gekennzeichnet, dass** die Steuerungseinrichtung (8) zumindest ein Stellglied (18, 22, 23, 26, 28, 30, 32) des Gargeräts (1) ansteuert, welches zum Verändern einer in dem Garraum (3) herrschenden Feuchte ausgebildet ist.
